# EUROPEAN PATENT APPLICATION

(11) **EP 3 518 469 A1**
(43) Date of publication of application: **31.07.2019**
(21) Application number: 18153656.6
(22) Date of filing: 26.01.2018
(51) Int. Cl.: H04L 12/26, H04L 12/24

(54) **A METHOD FOR MONITORING AN OPERATIONAL STATE OF NODES IN A NETWORK**

(71) Applicant: Siemens Aktiengesellschaft, 80333 München (DE)
(72) Inventor: Bröring, Arne, 81541 München (DE); Deshmukh, Rohit Arunrao, 85521 Ottobrunn (DE); Seeger, Jan, 80801 München (DE)

(57) **Abstract**

Embodiments for providing data as described herein generally involve a generally self-organizing monitoring of an operational state of nodes. In one embodiment a computer-implemented method for monitoring an operational state of nodes in a network is suggested, wherein at least one successor node is determined by an originator node. The at least one successor node of the originator node is at least determined by a directed dependency of nodes within a service workflow composition on an application layer. A node-initiated ping is transmitted to the at least one successor node by the originator node and the originator node reports each successor node as an unresponsive node to a controller which is not acknowledging the node-initiated ping within a predetermined timeout period.

## Description

### TECHNICAL FIELD

The disclosed embodiments relate to a method for monitoring an operational state of nodes in a network and, specifically, to a method for monitoring an operational state of IoT components (Internet of Things) in a self-organizational manner.

### BACKGROUND

Internet of Things (IoT) technology refers to a wide range of components which communicatively interact via a network for the purpose of autonomously processing distributed data. Since IoT technology has nearly limitless applications that can be leveraged to form new and useful services, interest among service providers and developers in IoT technology continues to increase.

In a typical IoT setup there may be several components communicating in a wireless manner. In order to manage these components a centralized controller is typically configured to check an availability or operational state of components within the range of its controlled network segment. In order to check the operational state of administered components, it is known to require the component to regularly transmit heartbeat messages or acknowledging ping messages issued by the controller.

A major disadvantage of this approach is a high message volume generated in connection with monitoring the operational state of administered components. Still further, as IoT workflows are becoming more and more controlled in a distributed, autonomous fashion, centrally managed controlling services are diminishing in importance with respect to a network design.

Accordingly there is a need in the art for providing alternative ways of monitoring an operational state of IoT components or nodes in a network.

### SUMMARY

Embodiments for providing data as described herein generally involve a generally self-organizing monitoring of an operational state of nodes.

In one embodiment a computer-implemented method for monitoring an operational state of nodes in a network is suggested, wherein:
- at least one successor node is determined by an originator node. The at least one successor node of the originator node is at least determined by a directed dependency of nodes within a service workflow composition on an application layer;
- a node-initiated ping is transmitted to the at least one successor node by the originator node; and;
- the originator node reports each successor node as an unresponsive node to a controller which is not acknowledging the node-initiated ping within a predetermined timeout period.

According to an embodiment a method is provided wherein
- the report of said unresponsive node is received by the controller;
- a controller-initiated ping to the unresponsive node is transmitted by the controller;
- the controller registers said unresponsive node as a failed node for the case that an acknowledgement to the controller-initiated ping is not received within a predetermined timeout period, or, otherwise, registers said unresponsive node as a link-failed node for the case that an acknowledgement to the controller-initiated ping is received within a predetermined timeout period.

According to an embodiment a method is provided wherein the failed node is registered in a failure consensus list maintained by the controller.

According to an embodiment a method is provided wherein a counter is maintained for at least one failed node in the failure consensus list and wherein the counter is incremented for each non-reception of an acknowledgement to the controller-initiated ping within the predetermined timeout period.

According to an embodiment a method is provided wherein a failure threshold is assigned to the counter maintained for the failed node and wherein the failed node is set to a declared failed status when its counter has reached the failure threshold.

According to an embodiment a method is provided wherein a declared failed status node is removed, by the controller, from the service workflow composition.

According to an embodiment a method is provided wherein the failed node and/or the declared failed status node is replaced by a currently undeployed node by integrating the undeployed node within the service workflow composition. According to an embodiment a method is provided wherein:
- the controller determines at least one originating undeployed node in an undeployed node list and transmits a controller-initiated ping to the originating undeployed node,
- the originating undeployed node determines a successor undeployed node, wherein the successor undeployed node is determined by a logical ring including each of the plurality of undeployed nodes;
- the originating undeployed node transmits a node-initiated ping to the successor undeployed node; and;
- the originating undeployed reports the successor undeployed node not acknowledging the ping within a predetermined timeout period as an unresponsive node to the controller.

The embodiments grant for a substantially decentralized monitoring within of nodes, particularly IoT components organized in an IoT workflow. This approach adopts the general trend of distributed and autonomous IoT workflows. The invented mechanism for mutual self-monitoring contributes to enabling IoT environments.

Compared to a formerly used centralized monitoring of IoT components, the suggested embodiments significantly reduce a message load imposed on the controller. This is of particular importance for large future systems, which would otherwise place unreasonable requirements on the controller. Further on, a reduced message load makes the overall system more scalable.

Still advantageous, the monitoring of IoT components is more localized and can e.g. be captured within a local subnet. This reduces bandwidth requirements in IoT environments. This is particularly important in networks with a lower transmission bandwidth, e.g. wireless networks.

The embodiments are capable of detecting link failures between the nodes by a particular workflow which was not usable in traditional, centralized monitoring. Once such link failures are detected by the embodiments, the concerned workflow is registered as »broken« and the underlying system can try to re-establish the workflow.

Still further, the embodiments grant for distributed debugging information spread amongst the participating nodes. This enables a user or a developer in gaining accurate information on »active« and »broken« workflows.

### BRIEF DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1: shows a block diagram of an exemplary exchange of monitoring messages by nodes in a network according to an embodiment; and;
- FIG. 2: shows a block diagram of an exemplary exchange of monitoring messages by nodes in a network according to the state of the art; and;
- FIG. 3: shows a block diagram of an exemplary exchange of monitoring messages by nodes in a network according to an alternative embodiment.

### DETAILED DESCRIPTION

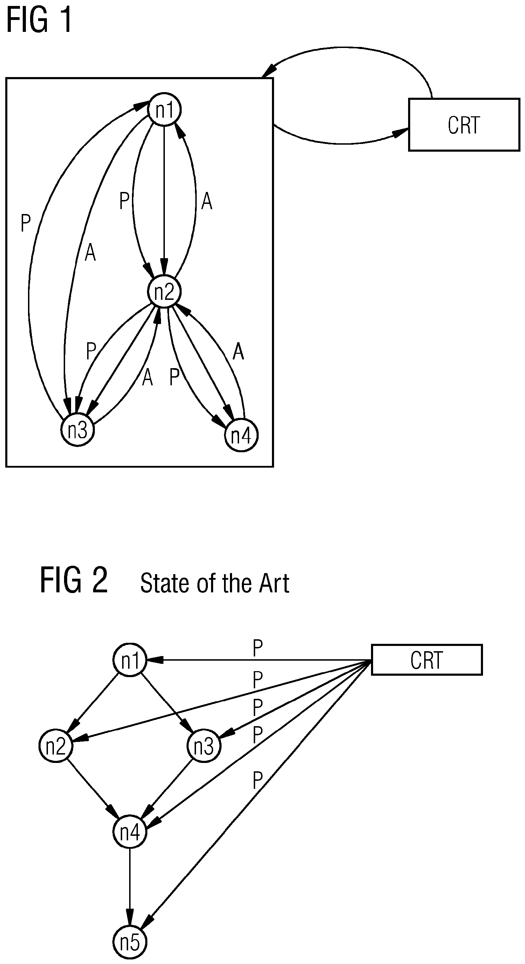

FIG. 2 shows a block diagram of a currently practiced exchange of monitoring messages by nodes in a network according to the state of the art.

A multiplicity of nodes or IoT (Internet of Things) components n1,n2,...,n5 is arranged in a directed dependency within a service workflow composition. Such a service workflow may be defined on an application layer. In the drawing a directed dependency between individual nodes n1,n2,...,n5 is represented by a directional arrow without reference sign.

According to an exemplary service workflow depicted by FIG. 2, a first node n1 is mainly employed for delivering data to a second node n2 and a third node n3, which means that the first node n1 is a data source for the second and the third nodes n2,n3 which are, consequently, a data sink in relation to the first node n1. Further on, a fourth node n4 is provided being a data sink in relation to the second and the third nodes n2,n3, which consequently act as a data source for the fourth node n4. This fourth node n4, finally provides data for a fifth node n5 being one major data sink of the overall workflow. The fifth node n5, therefore, may be also related to as end node of the workflow.

According to the state of the art a central controlling unit or controller CRT regularly checks the operational state - or availability - of each individual node n1,n2,...,n5 in the workflow.

At present, the controller CRT sends an individual ping message P to each of the nodes n1,n2,...,n5 i.e. a message requesting a confirmation response from each node n1,n2,...,n5 which has to be received by the controller CRT within a certain time limit.

This currently practiced approach results in a large communication overhead in the network which increases linearly with the number of nodes. In turn, an increasing communication overhead results in an increasing load on the side of the controller CRT in terms of its bandwidth usage, CPU usage etc. Accordingly, a growing number of nodes n1,n2,...,n5 in the network will jeopardize the scalability of the overall system.

FIG. 1 shows a block diagram of an exemplary exchange of monitoring messages by nodes in a network according to an embodiment.

According to an exemplary service workflow depicted by FIG. 1, a first node n1 is mainly employed for delivering data to a second node n2. The second node n2 is mainly employed for delivering data to a third node n3 and a fourth node n4 both being major data sinks of the overall workflow. Again, a directed dependency between individual nodes n1,n2,n3,n4 is represented by a directional arrow without reference sign in the drawing.

Although the nodes n1,n2,n3,n4 shown in FIG. 1 have partially identical reference signs with nodes n1,n2,...,n5 shown in FIG. 2, they are not to be regarded as identical. The consecutive order of nodes shown in both figures is chosen for synoptic reasons and not meant to express a correlation between nodes in different figures.

A central controller CRT receives reports of the operational state - or availability - of the group of nodes n1,n2,n3,n4 in the workflow. Unlike the operation of the controller CRT according to FIG. 2, these reports are neither requested from nor received individually by each individual node n1,n2,n3,n4 in the workflow. In order to illustrate an abandonment of the controller CRT in communicating with each individual node n1,n2,n3,n4, a box enclosing the group of nodes n1,n2,n3,n4 is symbolized in the drawing as an endpoint in a bidirectional communication of the controller CRT with the group of nodes n1,n2,n3,n4. The communication with the group of nodes n1,n2,n3,n4 is depicted by a pair of arcuate arrows without reference sign between the controller CRT and the box enclosing the group of nodes n1,n2,n3,n4.

According to the embodiments, ping messages P are no longer initiated by the controller CRT but by individual nodes in a node-initiated manner described below. In FIG. 1, node-initiated ping messages P are responded by an acknowledgement message A.

The proposed exchange of monitoring messages allows for a mutual self-monitoring of nodes within a service workflow composition, thereby advantageously reducing the load on the controller CRT and keeping network traffic more locally.

Generally, the proposed method for monitoring an operational state of the nodes n1,n2,n3,n4 comprises the steps of:
- determining at least one successor node n1,n2,n3,n4 by an originator node n1,n2,n3,n4, wherein the at least one successor node n1,n2,n3,n4 is at least determined by a directed dependency of the nodes n1,n2,n3,n4 within the service workflow;
- transmitting a node-initiated ping message P to the at least one successor node n1,n2,n3,n4 by the originator node n1,n2,n3,n4; and;
- reporting, by the originator node n1,n2,n3,n4, each successor node n1,n2,n3,n4 not acknowledging the node-initiated ping message P within a predetermined timeout period as an unresponsive node to the controller CRT.

The method described above is iterated along the service workflow, preferably in a downward direction, by rendering the former successor node n1,n2,n3,n4 to a new originator node n1,n2,n3,n4 and repeating the method described.

In the following exemplary steps are described for executing the above method by an individual node, presuming the first node n1 - or, in other words, a start node of the workflow - as the first originator node within the service workflow:
- The originator node n1 waits for a defined period of time t_monitor.
- The second node n2 is determined as a successor node n2 of the originator node n1 in the workflow. The originator node n1 pings each of its successors by a ping message P - in the exemplary workflow the originator node n1 is succeeded by one successor node n2 only - and waits for a reception of an acknowledgement message A of the successor node n2 or a timeout.
- In case an acknowledgement message A is received before the timeout period, the operational state of the successor node n2 and the link to the successor node n2 is considered alive. The method is terminated at this point with the result that no further action is required.
- In case an acknowledgement message A is not received within the timeout period, the originator node n1 reports the successor node n2 as unresponsive node to the controller CRT.

In case that the operational state and the link to the successor node n2 is considered alive, the former successor node n2 now assumes responsibility as an originator node n2 and the steps above are repeated accordingly. The new originator node n2 pings each of its successor nodes n3,n4 by a ping message P and waits for a reception of an acknowledgement message A of the successor nodes n3,n4 or a timeout.

Thereupon, in case that the operational state and the link to the successor node n3 is considered alive, the former successor node n3 now assumes responsibility as an originator node n3 and the steps above are repeated accordingly.

The third and the fourth nodes n3,n4 have no further successor nodes in the exemplary workflow. In other words, both nodes n3,n4 are characterized as a respective end node n3,n4 of the workflow.

Finally, the task of monitoring the operational states of all nodes in the network has to be completed for the at least one start node n1. According to an embodiment, the operational state of the start node n1 is monitored by at least one of the end nodes n3,n4. In the example shown in FIG. 1 the third node n3 pings the start node n1 by a ping message P and the steps above are repeated accordingly. This means that for monitoring purposes the one or more start nodes are considered successors of the one or more start nodes.

In the following, exemplary steps are described for executing the above method by the controller CRT. Unlike in the state of the art, the controller CRT is not necessarily involved in requesting the operational state of each node n1,n2,n3,n4. Instead, according to embodiments as shown above, these requests are executed by node-initiated ping messages P. The remaining task of the controller CRT is to attend to reports sent by temporary originator nodes for notifying one of more of their temporary successor nodes as unresponsive nodes.

The above described consecutive order along nodes in the workflow in which monitoring message pairs - ping messages P and acknowledgement messages A - are exchanged is mainly for illustrative purposes and certainly not limited to this order. In practical implementations, the order - i.e. which current originator node pings its successor nodes - in which the exchange is executed is rather depending on a timeout scheme imposed on individual nodes. As soon as a timeout has exceeded, such a node may start monitoring other nodes. Monitoring messages are mainly initiated on a periodic basis independent of a reception of ordinary messages, i.e. general messages for the exchange of data amongst nodes not related to mutual monitoring of nodes as described herein.

Generally, the proposed method for monitoring an operational state of the nodes n1,n2,n3,n4 comprises the steps of:
- receiving a report of an unresponsive node by the controller;
- transmitting a controller-initiated ping P to the unresponsive node by the controller;
- registering, by the controller, said unresponsive node as a failed node for the case that an acknowledgement A to the controller-initiated ping is not received within a predetermined timeout period, or, otherwise, registering, by the controller, said unresponsive node as a link-failed node for the case that an acknowledgement to the controller-initiated ping P is received within a predetermined timeout period.

According to an embodiment the controller CRT is additionally enabled to replace a failed or link-failed node by a currently undeployed node. According to this embodiment the controller CRT maintains two lists, namely a Failure Consensus List and an Undeployed Components List:
- The Undeployed Components List is a list of nodes, which are known to the controller CRT, but currently not part of any workflow.
- The Failure Consensus List is a list of currently deployed unresponsive nodes, i.e. nodes which are suspected to be link-failed or failed according to »votes« reported by nodes. A node is added to this list when the controller CRT is unable to reach the node and it is removed when the controller CRT is able to reach it. The list is used to examine whether a node has failed by collecting votes of other nodes in the workflow where it is deployed. To this end, the Failure Consensus List maintains a counter entitled »currentFailedVotes« of received failure notifications for a respective node along with a threshold value entitled »failureThreshold«, which is the minimum number of failure votes needed to declare an unresponsive component to be failed. All nodes monitoring a suspected node contribute a vote in the entry of the suspected node within the Failure Consensus List. In other words, the counter »currentFailedVotes« is incremented for each non-reception of an acknowledgement to a controller-initiated ping within the predetermined timeout period. Once a suspected node is finally declared as a failed node due to a sufficient count of votes - which means that the counter »currentFailedVotes« for this suspected node has reached or exceeded the failureThreshold - the suspected node is set to a »declared failed« status and removed from the service workflow composition. Additionally, upon being removed from the service workflow composition, the declared failed node is removed from the Failure Consensus List. Additionally, a Boolean variable entitled »declaredFailed« is set to TRUE for the declared failed node.

The proposed method according to this embodiment comprises the steps of:
a) The controller CRT listens to reports and messages of all kind from nodes n1,n2,n3,n4 administered by the controller CRT.
b) On receiving a report of an unresponsive node, the controller CRT starts an enquiry whether the node is unresponsive due to a failure of whether the node is unresponsive because it was not reachable by the reporting node. To this end the controller pings the unresponsive node and waits for an acknowledgement A or a timeout.
c) In case the controller receives an acknowledgement A from the unresponsive node within the timeout period, the controller CRT concludes that the unresponsive node is alive, but the link between the reporting node and the unresponsive node has failed. The node is registered as link-failed node.
d) In case the controller does not receive an acknowledgement A from the unresponsive node within the timeout period, the controller CRT concludes that the unresponsive node is either failed, link-failed on both - between the reporting node and the unresponsive node and between the controller CRT and the unresponsive node - links, or both failed and link-failed. The node is registered as failed node.

In order to recover the link between the reporting node and the link-failed node according to variant c) above, a new node is chosen by the following steps:
- If the link-failed node has an entry in the Failure Consensus List, the controller CRT removes its entry.
- The controller CRT accesses the Undeployed Components List in order to query a replacement node for the link-failed node with the aim of re-establishing the workflow. A suitable replacement node is used to replace the link-failed node in the workflow and its entry is deleted from the Undeployed Components List. If a suitable replacement node is not available, the link-failed node is removed from the workflow which is regarded as broken or stopped. The broken or stopped workflow may be reported to a responsive administrator or user. Optionally or additionally, the node reporting the link-failed node as unresponsive may be added to the Undeployed Components List.

In order to replace the failed node according to variant d) above, a new node is chosen by the following steps:
- The controller CRT accesses the Undeployed Components List in order to query a replacement node for the failed node with the aim of re-establishing the workflow. A suitable replacement node is used to replace the failed node in the workflow and its entry is deleted from the Undeployed Components List. If a suitable replacement node is not available, the failed node is removed from the workflow which is regarded as broken or stopped. In case that the failed node is additionally and currently deployed in other workflows, it is - if not already present - added to the Failure Consensus List of said workflow. The counter »currentFailedVotes« for the entry of the failed node in the Failure Consensus List of this workflow is incremented. If this counter reaches or exceeds the threshold »failureThreshold« the failed node is set to a declared failed status within the Undeployed Components List. This declared failed node is then and removed from all workflows. The controller CRT tries to replace the declared failed node in each of its administered workflows.

Compared to a formerly applied centralized monitoring of nodes, wherein the controller CRT queries each node by a ping message, the suggested embodiments significantly reduce a message load imposed on the controller. The proposed embodiments grant for a predominantly passive mode of the controller CRT which is not receiving any reports for the case that all nodes are responsive and operational. However, for the unlikely case that all nodes in a workflow would fail at the same time, the controller would remain unaware of the holistic failure.

According to an embodiment for preventing this unlike case the controller CRT is monitoring each workflow in order to actively detect such failures. In order to avoid additional network overload and preserving the reduced load on the controller, these monitoring checks by the controller may be scheduled rarely within wide intervals, e.g. once a day.

In the following an embodiment is described allowing for reutilizing regular communication between nodes for the purpose of monitoring their operational state in order to replace or reduce monitoring cycles.

The embodiments for mutual self-monitoring presented above provide a time interval t_monitor in which an originator node waits for a defined period until sending a monitoring message, i.e. ping, to its successor node. This waiting time interval ensures an operational workflow within this time interval. In order to decrease the number of sent messages in the network, the proposed method according to this embodiment makes use of messages that are part of the general communication between nodes, i.e. IoT components.

In an exemplary case wherein a first node n1 receives a general communication message from the second node n2 within the time interval t_monitor, an additional exchange of a monitoring message pair - consisting of a ping message and an acknowledgment message in response - between these two nodes is dispensable and unnecessary. Accordingly, according to this embodiment, ping messages and/or acknowledgment messages are omitted for the case that a current message exchange is in progress, whereby said current message exchange is not related to the node-initiated self-monitoring.

A particular efficient usage of this embodiment is given for the case when a broadcast message is sent by a node. All nodes receiving this broadcast message may treat the broadcast message as a replacement for a node-initiated ping message and/or acknowledgment message and register the initiator node of the broadcast message as operational or alive. The resulting reduction of network traffic is particularly advantageous in wireless networks.

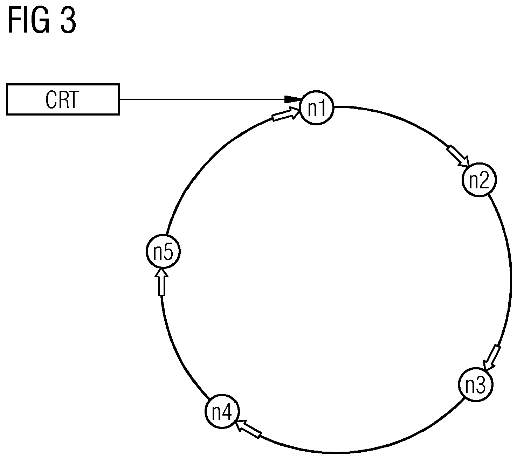

Turning now to FIG. 3 a further advantageous embodiment is shown for monitoring the operational state of undeployed nodes, which - unlike deployed nodes - are not organized by a workflow and for which, consequently, a succession of a successor node by an originator node cannot be determined by a directed dependency of nodes within the service workflow composition.

Preserving the general concept of mainly relying on node-initiated pings for conducting a mutual self-monitoring of the nodes, the proposed embodiment suggests an organization of a logical ring structure for organizing undeployed nodes, thereby deviating from the directed dependency in the case of deployed nodes within a service workflow.

In FIG. 3, node-initiated ping messages between undeployed nodes n1,n2,...,n5 are symbolized as arcuate arrows without reference sign. Each node-initiated ping message is responded by a respective acknowledgement message, not shown in the drawing. Although the undeployed nodes n1,n2,...,n5 shown in FIG. 3 have partially identical reference signs with deployed nodes n1,n2,n3,n4 shown in FIG. 1, they are not to be regarded as identical. The consecutive order of nodes shown in both figures is chosen for synoptic reasons and not meant to express a correlation between nodes in different figures.

According to this embodiment, at least one undeployed node n1,n2,...,n5 is organized in a directed unidirectional ring structure such that a node monitors its successor in the ring. The controller CRT maintains the following information about the ring:
- The successor undeployed node of a given undeployed node. If only one single undeployed node is present, this node is the successor of itself.
- The start undeployed node of the ring.

Generally, the proposed method according to this embodiment comprises the steps of:
- determining at least one originating undeployed node n1 in an undeployed node list - i.e. the start undeployed node of the ring - and transmitting a controller-initiated ping - symbolized by a directed arrow from the controller CRT to the first undeployed node n1 - to the originating undeployed node n1 by the controller CRT,
- determining a successor undeployed node n2 by the originating undeployed node n1, wherein the successor undeployed node is determined by a logical ring including the plurality of undeployed nodes;
- transmitting a node-initiated ping to the successor undeployed node n2 by the originating undeployed node n1; and;
- reporting, by the originating undeployed node n1, the successor undeployed node n2 not acknowledging the ping within a predetermined timeout period as an unresponsive node to the controller.

The method described above is iterated for the plurality of undeployed nodes n2,n3,n4,n5 along the logical ring, preferably unidirectional, by rendering the former successor node n2 to a new originator node n2 and repeating the method described.

The proposed embodiments again grant for a predominantly passive mode of the controller CRT which is not receiving any reports for the case that all undeployed nodes n1,n2,...,n5 are responsive and operational. However, for the unlikely case that all nodes n1,n2,...,n5 in a workflow would fail at the same time, the controller would remain unaware of the holistic failure. Hence the controller CRT monitors the ring actively to detect such failures. A proposed method for monitoring an operational state of undeployed nodes n1,n2,...,n5 comprises the steps of:
- The controller CRT waits for a defined period of time t_montor_ring.
- The controller CRT queries the Undeployed Components List in order to determine the start undeployed node n1 of the ring.
- The controller CRT sends a controller-initiated start undeployed node n1 and waits for a reception of an acknowledgement message or a timeout.
- In case an acknowledgement message is not received from the start undeployed node n1 within the timeout period, the controller CRT accesses the Undeployed Components List in order to query the next undeployed node in succession to the unresponsive start undeployed node n1 along the logical ring and to query the preceding undeployed node of the unresponsive start undeployed node n1. According to the rings structure shown in FIG. 3 the next undeployed node in succession to the unresponsive start undeployed node n1 is the second undeployed node n2 and the preceding undeployed node of the unresponsive start undeployed node n1 is the fifth undeployed node n5. The controller CRT defines the next undeployed node n2 in succession to the unresponsive undeployed start node n1 along the logical ring as the new start undeployed node n2 and defines this node as the new successor of the fifth undeployed node n5. Further on, the unresponsive undeployed first node n1 is removed from the ring structure and declared as failed within the Undeployed Components List.

Applying an initial controller-initiated ping prevents for an - however unlike - situation, in which all undeployed nodes n1,n2,...,n5 in the ring would fail at the same time. Since all nodes fail at the same time, no node could send a report to the controller CRT, which, accordingly, would remain unaware of the failure. Hence the controller CRT actively issues controller-initiated pings on the ring in order to detect such an unlike holistic failure affecting all undeployed components.

In line with the proceedings for deployed nodes, the method for monitoring the undeployed nodes again provides node-initiated ping messages so that the remaining task of the controller CRT is to merely attend to reports sent by temporary originator undeployed nodes for notifying one of more of their temporary successor undeployed nodes as unresponsive undeployed nodes.

In the following exemplary steps are described for executing the above described method by an individual undeployed node, presuming the first undeployed node n1 as the first originator undeployed node or start undeployed node within the ring structure:
- The originator undeployed node n1 waits for a defined period of time t_ring.
- The originator undeployed node n1 pings its successor undeployed n2 and waits for a reception of an acknowledgement message or a timeout.
- In case an acknowledgement message in response to the ping message is received before the timeout period, the operational state of the successor undeployed node n2 and the link to the successor undeployed node n2 is considered alive. The method is terminated at this point with the result that no further action is required.
- In case an acknowledgement message is not received within the timeout period, the originator undeployed node n1 reports the successor undeployed node n2 as unresponsive node to the controller CRT.

In case that the operational state and the link to the successor undeployed node n2 is considered alive, the former successor node n2 now assumes responsibility as an originator node n2 and the steps above are repeated accordingly. The new originator undeployed node n2 pings its successor undeployed node n3 by a ping message and waits for a reception of an acknowledgement message of the successor undeployed nodes n3 or a timeout.

Thereupon, in case that the operational state and the link to the successor undeployed node n3 is considered alive, the former successor undeployed node n3 now assumes responsibility as an originator undeployed node n3 and the steps above are repeated accordingly.

The steps are repeated accordingly along the ring until the originator undeployed node n5 pings its successor undeployed node n1 - being the first originator undeployed node or start undeployed node within the ring structure - by a ping message and waits for a reception of an acknowledgement message of the successor undeployed node n1 or a timeout. This monitoring step closes the logical ring and terminates the method for monitoring the operational state of a plurality of undeployed nodes.

As analogously described for the case of deployed nodes, the above described consecutive order along undeployed nodes in the ring in which monitoring message pairs are exchanged is mainly for illustrative purposes and certainly not limited to this order. In practical implementations, the order - i.e. which current undeployed originator node pings its successor undeployed nodes - in which the exchange is executed is rather depending on a timeout scheme imposed on individual undeployed nodes.

In the following, exemplary steps are described for executing the above method by the controller CRT. In line with the proceedings for deployed nodes the remaining task of the controller CRT is to attend to reports sent by temporary originator undeployed nodes for notifying one of more of their temporary successor undeployed nodes as unresponsive undeployed nodes.

A proposed method for monitoring an operational state of undeployed nodes n1,n2,...,n5 comprises the steps of:
- The controller CRT listens to reports and messages of all kind from undeployed nodes n1,n2,...,n5 administered by the controller CRT.
- On receiving a report of an unresponsive undeployed node, the controller CRT pings the unresponsive undeployed node undeployed and waits for an acknowledgement or a timeout.
- In case the controller CRT does not receive an acknowledgement from the unresponsive undeployed node within the timeout period, the controller CRT accesses the Undeployed Components List in order to query the next undeployed node in succession to the unresponsive undeployed node along the logical ring. If the unresponsive undeployed was the start undeployed node n1 of the ring, the controller CRT defines the next undeployed node n2 in succession to the unresponsive undeployed node n1 along the logical ring as the new start undeployed node n2. Further on, the unresponsive undeployed node is removed from the ring structure and the next suitable undeployed node in succession to the unresponsive undeployed node along the logical ring is declared as the successor of the undeployed node preceding the unresponsive undeployed node. Eventually, the controller CRT declares the unresponsive undeployed node as failed within the Undeployed Components List.

In the following, an embodiment is described allowing for handling a recovery of failed nodes in general, particularly failed IoT components. This embodiment refers to a link-failure recovery. In a normal scenario, on the event of a failure of a node, the node it will lose its communication configuration. After recovery of a failed node, it will re-register by design at the controller and the usual communication mechanism can be established.

However, if not the node itself does fail but the communication link to this node, said node still maintains its intact configuration. By the time the communication link is fixed, the controller might have removed this node from all workflows where it was deployed and might have declared the node to be failed. Although the communication link is fixed in the meantime, the node is still unaware thereof and will continue sending messages to other nodes. According to this embodiment, these messages are to be ignored and node needs to be asked to re-register at the controller.

The proposed method executed on other nodes according to this embodiment comprises the steps of:
- Listening to communication messages or monitoring messages.
- On reception of a message, verifying the source of this message.
- If the message is from an unexpected source node, the message is ignored and the controller is informed by a report in that a message from an unexpected source has been received. The report sent to the controller includes the identification and/or address of the unexpected source node.

The above steps are repeated.

The proposed method executed on the controller according to this embodiment comprises the steps of:
- Listening to communication messages or monitoring messages received from nodes.
- On reception of a report in that a message from an unexpected source has been received, extracting the identification and/or address of the unexpected source node from the report and checking whether the unexpected source node is in a »declared failed« status.
- If the »declared failed« status is TRUE for the unexpected source node, ask the unexpected source node to re-register.
- If the »declared failed« status is FALSE for the unexpected source node, find out the workflows where the unexpected source node is still deployed and send a new communication configuration to the unexpected source node.
The above steps are repeated.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for monitoring an operational state of nodes in a network, comprising the steps of:
- determining at least one successor node by an originator node, wherein the at least one successor node is at least determined by a directed dependency of nodes within a service workflow composition on an application layer;
- transmitting a node-initiated ping to the at least one successor node by the originator node; and;
- reporting, by the originator node, each successor node not acknowledging the node-initiated ping within a predetermined timeout period as an unresponsive node to a controller.

2. The method according to claim 1, further comprising the steps of:
- receiving said reporting of said unresponsive node by the controller;
- transmitting a controller-initiated ping to the unresponsive node by the controller;
- registering, by the controller, said unresponsive node as a failed node for the case that an acknowledgement to the controller-initiated ping is not received within a predetermined timeout period, or, otherwise, registering, by the controller, said unresponsive node as a link-failed node for the case that an acknowledgement to the controller-initiated ping is received within a predetermined timeout period.

3. The method according to claim 2, wherein the failed node is registered in a failure consensus list maintained by the controller.

4. The method according to claim 3, wherein a counter is maintained for at least one failed node in the failure consensus list and wherein the counter is incremented for each non-reception of an acknowledgement to the controller-initiated ping within the predetermined timeout period.

5. The method according to claim 4, wherein a failure threshold is assigned to the counter maintained for the failed node and wherein the failed node is set to a declared failed status when its counter has reached or exceeded the failure threshold.

6. The method according to claim 5, wherein a declared failed status node is removed, by the controller, from the service workflow composition.

7. The method according to claim 6, wherein the failed node and/or the declared failed status node is replaced by a currently undeployed node by integrating the undeployed node within the service workflow composition.

8. The method according to claim 7 for monitoring the operational state of a plurality of said undeployed nodes, comprising the steps of:
- determining at least one originating undeployed node in an undeployed node list and transmitting a controller-initiated ping to the originating undeployed node by the controller,
- determining a successor undeployed node by the originating undeployed node, wherein the successor undeployed node is determined by a logical ring including the plurality of undeployed nodes;
- transmitting a node-initiated ping to the successor undeployed node by the originating undeployed node; and;
- reporting, by the originating undeployed node, the successor undeployed node not acknowledging the ping within a predetermined timeout period as an unresponsive node to the controller.

9. A device, comprising:
a network communication circuit configured to connect the node to a network communication medium;
a memory communicatively coupled to the network communication circuit; and;
a processor operatively coupled to the network communication circuit and the memory, the memory storing instructions that when executed cause the processor to:
- determine at least one successor node by the device, wherein the at least one successor node is at least determined by a directed dependency of nodes within a service workflow composition on an application layer;
- transmitting a node-initiated ping to the at least one successor node by the network communication circuit; and;
- reporting each successor node not acknowledging the node-initiated ping within a predetermined timeout period as an unresponsive node to a controller.
